# EUROPEAN PATENT SPECIFICATION

(11) **EP 4 026 219 B1**
(45) Date of publication and mention of the grant of the patent: **05.08.2026**
(21) Application number: 20781123.3
(22) Date of filing: 03.09.2020
(51) Int. Cl.: F03D 13/10, F03D 13/25, H02G 9/02, H02G 9/12, F03D 9/25, H02J 3/38

(54) **OFFSHORE SUBSEA POWER DISTRIBUTION**
OFFSHORE-UNTERWASSERLEISTUNGSVERTEILUNG
DISTRIBUTION D'ÉNERGIE SOUS-MARINE EN HAUTE MER

(30) Priority: 03.09.2019 GB 201912612; 26.11.2019 GB 201917188; 27.11.2019 GB 201917260
(43) Date of publication of application: 13.07.2022
(60) Divisional application: 22194597.5
(73) Proprietor: Aker Solutions AS, 1325 Lysaker (NO)
(72) Inventor: HEGGEDAL, Ole, 1475 FINSTADJORDET (NO); BJERKNES, Ole Johan, 0786 OSLO (NO); EIDSVIK, Håkon, 3044 DRAMMEN (NO); LAGSET, Atle, 0882 OSLO (NO)
(74) Representative: Zacco Norway AS
(86) International application number: PCT/NO2020/050221
(87) International publication number: WO 2021/045627

(56) References cited:
- EP-A1- 3 527 821
- WO-A1-2013/182205
- WO-A2-2013/050755
- US-A1- 2010 033 016
- MAWBY ISAAC ET AL: "Marine renewables power distribution hub", OCEANS 2017 - ABERDEEN, IEEE, 19 June 2017 (2017-06-19), pages 1 - 5, XP033236552, DOI: 10.1109/OCEANSE.2017.8084679

## Description

The present invention relates to offshore power distribution, and particularly to systems and methods for distributing electric power to (or from) offshore power generators.

### BACKGROUND

Offshore power generation is growing, and development of renewable resources such as offshore wind or wave power is seen as a key contributor to providing clean energy for the future. For example, offshore wind is already an established technology, and floating wind energy converters are currently being studied and developed by various research and development (R&D) groups, both within academia and industry, which will vastly increase the available areas suitable for offshore wind power generation. Other technologies being studied by various groups are wave and tidal power systems.

Publications which may be useful to understand the background include WO 2019/141841 A1; WO 2009/131826 A2; WO 2013/110276 A1; and WO 2013/050755 A2; US 2010/033016 A1 (THORBURN KARIN [SE] ET AL) 11 February 2010 (2010-02-11); EP 3 527 821 A1 (SIEMENS GAMESA RENEWABLE ENERGY AS [DK]) 21 August 2019 (2019-08-21); WO 2013/182205 A1 (VESTAS WIND SYS AS [DK]) 12 December 2013 (2013-12-12); MAWBY ISAAC ET AL: "Marine renewables power distribution hub",OCEANS 2017 - ABERDEEN, IEEE, 19 June 2017 (2017-06-19), pages 1-5, XP033236552,DOI: 10.1109/OCEANSE.2017.8084679.

With a projected continued increase in the investments into offshore power generation in the future, there is a need for further improved technology for offshore power distribution. The present disclosure has the objective to provide such improvements, or at least alternatives, to the current state of the art.

### SUMMARY

In an embodiment, there is provided an offshore power distribution system comprising: a plurality of first cables, each first cable having a first dry mate connection at a first end thereof and being connected to an offshore power generator unit at a second end thereof; a subsea junction box arranged at a sea floor, wherein each dry mate connection terminates inside the junction box; a second cable extending from the junction box to a subsea transformer station arranged at the sea floor, the second cable having a second dry mate connection at an end thereof, the second dry mate connection terminating inside the junction box operatively connected to the first dry mate connection; the second cable extending to a subsea transformer station arranged at the sea floor and operatively connected to the transformer station; a third cable extending from the transformer station to an onshore receiver; the power distribution system being configured to transmit electric power from the offshore power generator unit, via the first, second and third cables, to an onshore receiver. The subsea junction box is retrievable to surface and an end section of the first cables and an end section of the second cable are laid out in parallel on the sea floor.

In an embodiment, there is provided a method of installing an offshore power distribution system comprising the steps: installing a plurality of power generators, each power generator having a first cable with a first dry mate connector at a first end thereof; installing a subsea transformer station at the sea floor and installing a third cable extending from the transformer station to an onshore receiver; installing a subsea junction box at the sea floor, wherein the subsea junction box is retrievable to surface, connecting the subsea junction box and the transformer station with a second cable; arranging an end section of each first cable and an end section of the second cable in parallel on the sea floor, and connecting the first cable with the second cable, wherein the step of connecting the first cable with the second cable comprises establishing a dry mate connection between the first cable and the second cable within the junction box.

In an embodiment, there is provided a method of distributing power in an offshore power distribution system, the method comprising: operating an offshore power distribution system; retrieving a junction box from the sea floor to a vessel; carrying out an installation, de-installation or service operation on the junction box; and re-installing the junction box to the sea floor. The appended claims and the detailed description below outline further embodiments.

### BRIEF DESCRIPTION OF THE DRAWINGS

These and other characteristics will become clear from the following description of illustrative embodiments, given as non-restrictive examples, with reference to the attached drawings, in which:
Fig. 1 shows an example of an offshore power generator unit.
Fig. 2 shows an offshore power distribution system according to an embodiment.
Figs 3 and 4 illustrate parts of the offshore power distribution system in Fig. 2.
Fig. 5 shows an offshore power distribution system according to an embodiment.
Figs 6 and 7 show an offshore power distribution system according to an embodiment.
Figs 8-11 illustrate parts of an offshore power distribution system.
Figs 12-15 illustrate steps of a method of installing an offshore power distribution system.
Fig. 16 illustrates a junction box showing some external detail thereof.
Fig. 17 shows a power generation unit being disconnected from an array in an offshore location.

### DETAILED DESCRIPTION

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

As used herein, the term "subsea cable" is intended to be representative of any type of cable such as, for example, single- double- or triple-core power cables, radial field or collectively shielded power cables or any other conductive or non-conductive cables or cords that are routed from a nacelle to a tower of a wind turbine, for example, control cables.

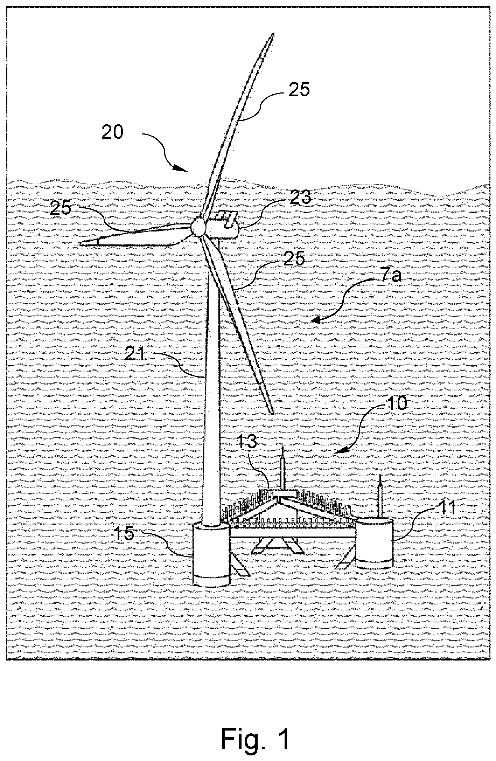

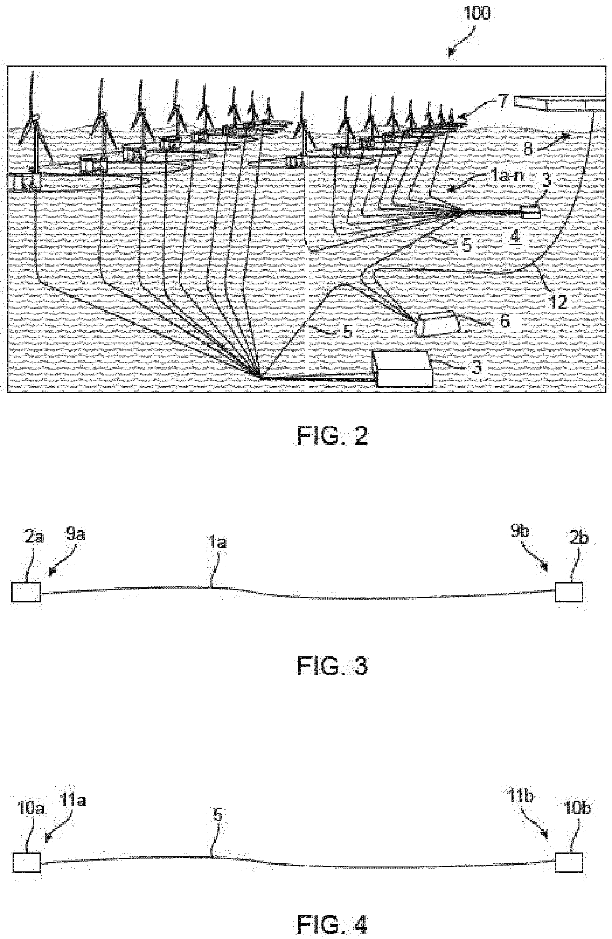

By way of example and context, Figs 1 and 2 illustrate one possible configuration which may be suitable for use with the power distribution method, system and arrangement of the present disclosure. It will, however, be appreciated that the distribution method and arrangement is not dependent on the exact design of other system components, such as the floater and subsea parts, which may have a design different from those described in the examples below.

Figure 1 illustrates an offshore power generation unit 7a suitable for use with embodiments of the present disclosure. The power generation unit 7a of Fig. 1 is a floating wind generator, or floatable wind energy power plant. Other types of power generation units suitable for use with embodiments of the present disclosure include bottom-fixed wind power generators, generators utilising tidal water, wave power, solar or nuclear energy, or any other type of offshore power generation unit.

The floatable wind energy power plant 7a comprises a floater 10 and a wind turbine 20. The wind turbine 20 can be of a conventional design with a tower 21, a nacelle 23 and blades 25.

The floater 10 comprises three columns 11,13,15. Each of the columns 11,13,15 is connected to at least two of the other columns 11,13,15. In some embodiments, there may be more than three columns in the floater 10, for example four, five or six columns.

Each column 11,13,15 has a lower part configured to be submerged in an operational position of the floater 10, in relation to column 15. Each column 11,13,15 is connected to at least two of the other columns at lower parts of the respective columns 11,13,15. This connection may be by means of substantially horizontal connection members.

Figure 2 illustrates an offshore power distribution system 100 according to an embodiment. The system 100 comprises a plurality of array cables 1a-n to transmit electrical power from a number of power generation units 7. Fig. 3 illustrates an array cable 1a schematically. Each array cable 1a-n has a dry mate connector 2b at a first, subsea end 9b of the cable. The second, topside end 9a of the array cable 1a-n is connected to a respective offshore power generator unit 7 with connector 2a.

In Fig. 2, each power generator unit 7 has its own dedicated array cable 1a-n. Optionally, there may be two or more power generator units 7 daisy chained, in which case the array cable 1a-n here would refer to the cable extending from the power generator unit 7 at the end of the chain and through which the power is routed from the other, daisy-chained power generator units 7.

Referring again to Fig. 2, a subsea junction box 3 is arranged at a sea floor 4. In this embodiment, two junction boxes 3 are used, however one junction box 3 or more than two junction boxes may also be used. Each dry mate connector 2b of the respective array cables 1a-n terminates inside the junction box 3 in this example. However, in the example where the power generator units 7 are daisy chained together, then fewer cables (e.g. one cable) may connect the daisy chained power generator units 7 to the junction box 3, while other array cables may form connections between the power generator units 7.

An intermediate cable 5 extends from the junction box 3 to a subsea transformer station 6 arranged at the sea floor 4. Fig. 4 illustrates the intermediate cable 5 schematically. The intermediate cable 5 has a dry mate connector 10a at one end 11a of the cable and another connector 10b at the other end 11b. The other connector 10b may be a similar dry mate connector as connector 10a, or a different type. The dry mate connector 10a terminates inside the junction box 3 and is operatively (i.e., electrically) connected to the dry mate connectors 2b of the array cables 1a-n. The intermediate cable 5 is thus arranged to transmit electrical power supplied by the array cables 1a-n.

The intermediate cable 5 extends from the junction box 3 to a subsea transformer station 6 also arranged at the sea floor 4. The intermediate cable 5 thus transmits electrical power from the array cables 1a-n to the transformer station 6, to which it is operatively connected.

An export cable 12 extends from the transformer station 6 to an onshore receiver 8. The export cable 12 is arranged to transmit electric power received from the intermediate cable 5 from the transformer station 6 to the onshore receiver 8. The onshore receiver may, for example, be an onshore grid, an energy storage plant, an electric power consumer, or the like.

The power distribution system 100 is thus configured to transmit electric power from the offshore power generator units 7, via the array cables 1a-n, the junction box 3, the intermediate cable 5, the transformer station 6, and the export cable 12 to the onshore receiver 8.

The transformer station 6 is configured to increase the voltage of the electric power received from the intermediate cable 5 before supplying it to the export cable 12.

The export cable 12 thus operates with a higher voltage than the intermediate cable 5. Advantageously, the cross-section of the electrical leads in the export cable 12 is lower than the cross-section of the electrical leads in the intermediate cable 5. Nevertheless, the cross-section of the export cable 12 may be the same or larger than that of the intermediate cable 5, for example if the export cable 12 is very long or if several intermediate cables 5 supplies one export cable 12, as in the example shown in Fig. 2.

In any embodiment, the array cables 1a-n and the intermediate cable 5 can be configured to operate with the same voltage. In which case, there is substantially no change in voltage in the junction box 3.

In any embodiment, the design operational voltage for the array cables 1a-n and the intermediate cable 5 may be, for example, above 30 kV, above 40 kV, or above 65 kV.

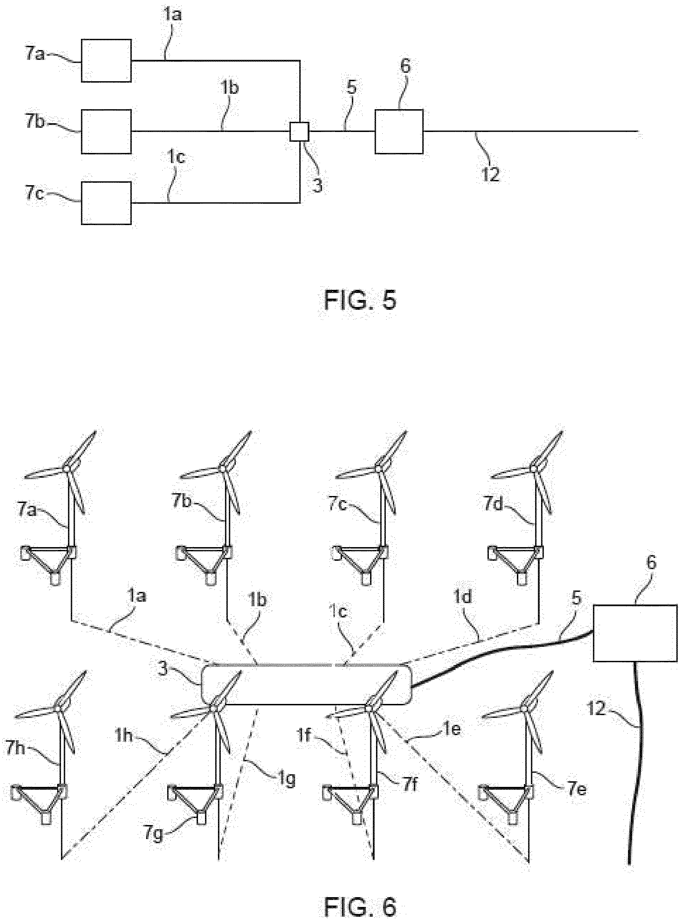

Figure 5 illustrates another embodiment, having three power generation units 7a-c. The other components are equivalent to those described above.

As will be appreciated, numerous other configurations of an offshore power generation systems are possible, e.g. having floating wind turbines of a different design, other types of power plants, a different number of power plants (from one to many), etc. For the present description, however, it will be assumed that the power plant is a floating wind energy power plant.

Figure 6 illustrates a further embodiment, having eight power generation units 7a-h, each having a respective array cable 1a-h extending to a junction box 3. The other components are equivalent to those described above.

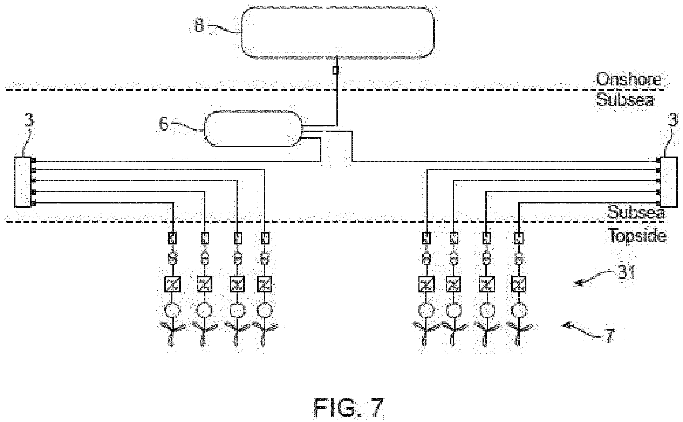

Figure 7 illustrates an electrical line diagram / connection chart for the embodiment shown in Fig. 6. Each power generation unit 7a-h may comprise electrical power conditioning components 31, as required. The electrical power conditioning components 31 may comprise a switchgear, as described in further detail below.

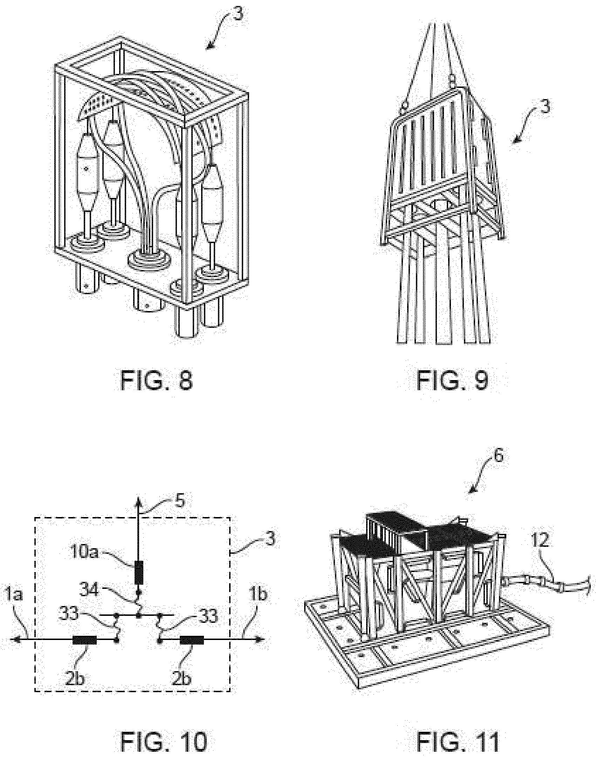

Figures 8 and 9 illustrate an example of a junction box 3 suitable for use with the embodiments described herein. Indicated in Fig. 8, the junction box 3 may comprise internal connectors/connections and also fuses, as described in more detail below. As can be seen in Fig. 9, the junction box is retrievable to surface from a vessel.

Illustrated in Fig. 10, the junction box 3 comprises the connectors 10a (connecting the intermediate cable 5 extending to the transformer station 6) and 2b (connecting the array cable(s) 1a-n coming from the power generation units 7; here illustrated with two array cables 1a,1b). Additionally, the junction box 3 may comprise respective fuses 33,34. The fuses 33,34 may be arranged to cut the connection between one or more of the array cables 1a-n and the intermediate cable 5 in the event of e.g. excessive loads. There may be a fuse 34 operable to cut the connection between the intermediate cable 5 and all the array cables 1a-n. Additionally, or alternatively, there may be individual fuses 33 associated with each array cable 1a-n, and operable to cut the connection between a respective array cable 1a-n and the intermediate cable 5, while maintaining a connection between other array cables 1a-n and the intermediate cable 5.

As can be most clearly seen in Fig. 9, the junction box 3 is retrievable to surface from a vessel. In some examples, the junction box 3 may comprise a load bearing arrangement therein, which may assist to support the weight of cabling in some scenarios, for example where the junction box 3 and associated cabling is lifted. The load bearing arrangement may comprise a load bearing termination located on each of the array cables 1a, 1b, located inside the junction box 3. The load bearing termination may be, for example, a pull-head with a hang-off interface. The load bearing arrangement may function to transfer load from the array cables 1a, 1b, and to the junction box 3. As such, the junction box 3 may be able to bear a load equivalent to the weight of the array cables, for example if the junction box 3 is lifted with the array cables 1a, 1b attached thereto.

As can be most clearly seen in Figs. 9 the junction box 3 may be able to be attached to a crane or winch, which may facilitate holding of the junction box 3 on a vessel, and may additionally facilitate raising or lowering of the junction box to/from a subsea location. The described method may therefore comprise attachment of the junction box to a support means, such as a crane, cable or winch. This can be done by connecting a vessel crane hook or a winch wire to a forerunner or similar on the junction box 3. The junction box 3 can then be recovered to, or lowered from, a surface location (e.g. the deck of a vessel), for example through a vessel moonpool (if any) or to a worktable along the vessel side or similar.

Fig. 11 shows an illustration of the transformer unit 6 arranged on the sea floor with the export cable 12 connected thereto. (Intermediate cable 5 not visible here.)

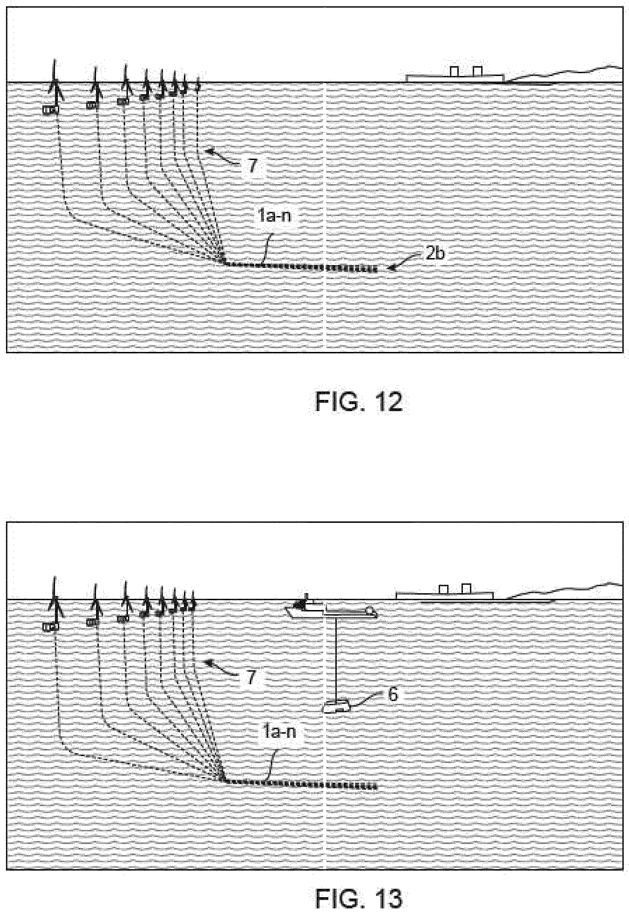

Figures 12-15 illustrate various steps in an installation method according to an embodiment. As shown in Fig. 12, a plurality of power generator units 7 can be installed offshore, for example by mooring to the sea floor or by fixed installation on the sea floor. Each power generator 7 has an array cable 1a-n for transmitting electrical power, and each array cable has a dry mate connector 2b at the end thereof. (See also Fig. 3.) The other end of the cable 1a-n is fixed and operationally connected to the power generator unit 7, for example in the tower or nacelle of the power generator unit 7. The dry mate connectors 2b can be wet stored on the sea floor upon installation of the power generator units 7 and the array cables 1a-n.

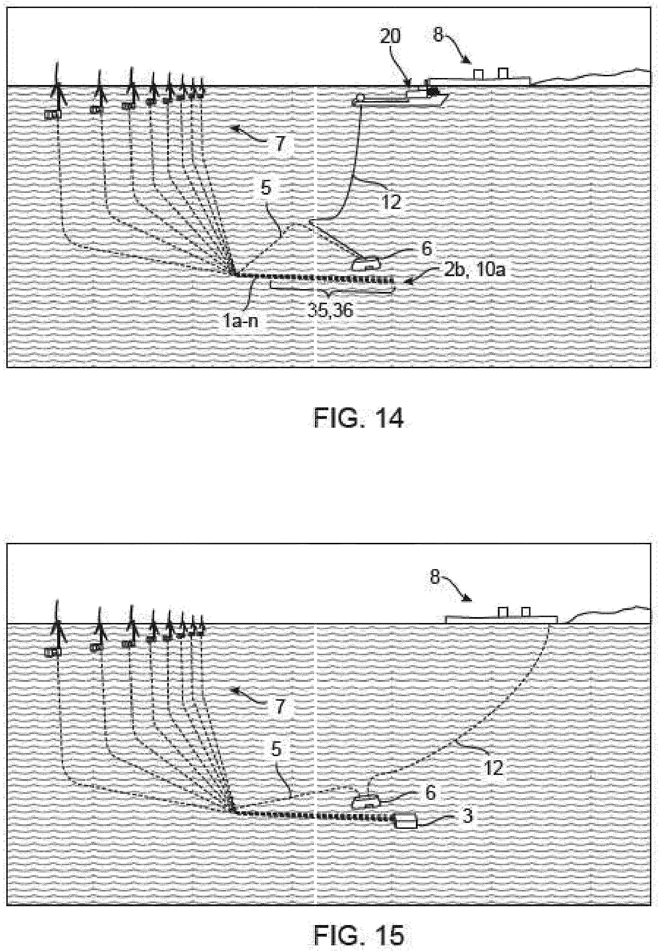

In Fig. 13, a subsea transformer station 6 is installed on the sea floor by a vessel 20. Shown in Fig. 14, an export cable 12 is further installed, the export cable 12 extending from the transformer station 6 to an onshore receiver 8.

Advantageously, the export cable 12 is dry mated to the subsea transformer station 6 before installation, and the transformer station 6 and the export cable 12 installed in the same operation. This avoids the need for a wet-mate connection between the export cable 12 and the transformer station 6, or a need to retrieve the transformer station 6 to connect the export cable 12 after installation. In such a case, depending on the desired installation method, the combined laying of the transformer station 6 and the export cable 12 can either start offshore with the transformer station 6 and end with the landfall of the export cable 12, or the other way around starting with landfall of the export cable 12 and ending with deploying the transformer station 6.

Advantageously, the intermediate cable 5 may also be dry mated to the subsea transformer station 6 before installation, and the intermediate cable 5 and the transformer station 6 installed in the same operation. This avoids the need for a wet-mate connection between the intermediate cable 5 and the transformer station 6, or a need to retrieve the transformer station 6 to connect the intermediate cable 5 after installation.

Advantageously, the intermediate cable 5 can be laid out on the sea floor in parallel with the subsea ends of the cables 1a-n. This is illustrated in Fig. 14, where the connectors 2b and 10a are wet-stored adjacent each other on the sea floor. This may ease the installation of a junction box 3, described below. Optionally, an end section 35 of the array cable(s) 1a-n and an end section 36 of the intermediate cable 5 (see Fig. 14) which are laid out in parallel has a length which is larger than the water depth at the site. This provides that a more controlled retrieval of the connectors 2b,10a and the end sections 35,36 can be achieved, in that the parallel sections 35,36 can be raised and lowered together by a vessel with lower risk of complications.

The method further comprises installing a subsea junction box 3 at the sea floor, as shown in Fig. 15, and arranging the intermediate cable 5 to interconnect the subsea junction box 3 and the transformer station 6. Additionally, the array cables 1a-n are operationally connected with the intermediate cable 5 inside the junction box 3 by establishing a dry mate connection between the array cables 1a-n and the intermediate cable 5 within the junction box 3.

As noted above, the method may comprise retrieving the dry mate connectors 2b of the array cables 1a-n from the sea floor if they have been wet stored, and establishing the dry mate connection inside the junction box 3 at a vessel 20. The intermediate cable 5 may also have been wet stored after installation, and the method may therefore also comprise retrieving a dry mate connector 10a of the intermediate cable 5 before establishing the dry mate connection in the junction box 3.

The connection of the array cables 1a-n to the intermediate cable 5 can take place in parallel or one by one depending on whether one or more array cables 1a-n are recovered to deck together with the intermediate cable 5. The array cables 1a-n can optionally be recovered one at a time.

After making up the connection between the array cable(s) 1a-n and the intermediate cable 5 in the junction box 3, the junction box 3 with the cables 1a-n,5 connected is lowered to the seabed. Optionally, the next array cable 1a-n may be retrieved for connection to the junction box 3, if the process is done sequentially in steps for different array cables 1a-n. In that case, the process can be repeated until all array cables 1a-n are connected to the intermediate cable 5 and the make-up of the junction box 3 is completed. Recovery of one or more array cables 1a-n can alternatively be performed by a second vessel, if available, and then handed over to the main vessel by wet hand shake or similar method.

Optionally, to recover more than one (or all) of the array cables 1a-n and the intermediate cable 5 to deck in one run, the cable ends 2b,10a can be arranged in a recovery frame subsea. The recovery frame is then recovered to deck according to the same steps as for a single cable connection, and the connection between the array cables 1a-n and the intermediate cable 5 can take place in parallel.

As described above, the subsea transformer station 6 can be installed together with the intermediate cable 5 and with a transformer end connector 10b (see Fig. 4) of the intermediate cable 5 having been pre-installed on the transformer station 6 prior to deployment. Additionally, or alternatively, the subsea transformer station 6 can be installed with the export cable 12 or a part of the export cable 12 (e.g. a "tail end") having been pre-installed on the transformer station 6, and whereby a connection is subsequently made up between the tail end and the respective export cable 12 and/or intermediate cable 5. This may be a dry mate connection established by retrieving the tail end(s) and respective export cable 12 and/or intermediate cable 5 end(s) and connecting these, for example on a vessel deck.

As will be understood, the different steps of the method may be altered. For example, cable ends can be wet-stored intermediately in order that the method can be carried out most efficiently, for example in view of the service vessels available at any given time, or a given weather window.

Advantageously, a system and method according to embodiments of the present disclosure allow more operational flexibility and easier maintenance of the offshore power distribution system. For example, after employment of the subsea power distribution system 100, the junction box 3 may be retrieved at a later time by a vessel, to provide maintenance, repairs, replacements, etc.

In use, the method of operating the offshore power distribution system 100 can therefore include retrieving the junction box 3 from the sea floor to a vessel 20 and re-installing the junction box 3. This may be done, for example, to replace fuses 33,34 in the junction box 3, to add or remove power generator units 7 to/from the system, etc.

Embodiments may further provide a more cost-competitive power distribution through de-bottlenecking by using existing equipment in the marked and reduced cost by less complex components (e.g., standardized cable design), and reduced maintenance costs. Compared to some alternatives, embodiments herein may reduce the number of pressure-sensitive components arranged subsea.

In the above embodiments, the topside and subsea connections of the array cables 1a-n are made by dry mate connectors 2a and 2b, respectively. Alternatively, one or both of these may be a different type of dry mate connection. Particularly, this dry mate connection may be a spliced connection. Similarly, one or both of the end connections of the intermediate cable 5 may be a spliced, dry mate connection instead of one or both of the connectors 10a,10b.

Each power generation unit 7 may have a respective switchgear arranged on the power generation unit 7. (For example, in the case of a floating wind turbine such as that illustrated in Fig. 1, the switchgear may be arranged in the floater or in the turbine tower or nacelle.) The switchgear may be operable to disconnect the respective power generation unit 7 from its array cable 1a-n.

Advantageously, the system may be arranged such that neither the array cables 1an, the subsea junction box 3, the second cable 5 nor the transformer station 6 comprises a switchgear. By providing the switchgear in the power generation units 7 and having no switchgear in the mentioned subsea components, the risk of downtime or failure can be reduced. (With "switchgear" is meant a selectively operable switch or switching mechanism, i.e. one by which an operator can make or break an electrical connection, and unlike the (passive and automatic) fuses 33,34.)

Advantageously, the system may be arranged such that neither the array cables 1an, the subsea junction box 3 nor the second cable 5 comprises a wet-mate connector.

Advantageously, the export cable 12 may be configured for operation with a voltage of 132 kV or more.

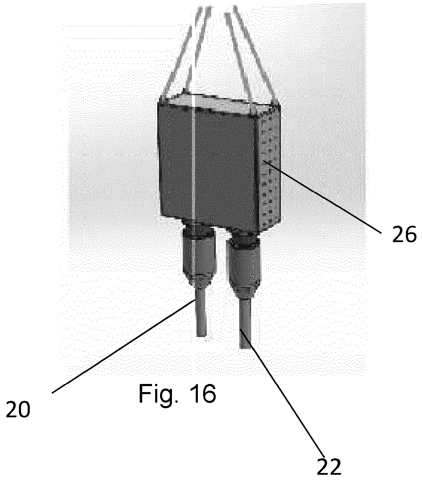

Referring to the previous examples of Figures 8-10, and additionally new Figure 16, Figures 8 and 9 illustrate an example of a junction box 3. As before, indicated in Fig. 8, the junction box 3 may comprise a length or lengths of cabling which may function as internal connectors/connections and also fuses. As can be seen in Fig. 9 and Fig. 16, the junction box of Figure 3 is retrievable to surface from a vessel.

In the example of Fig. 16, one of the cables 20, 22, attached thereto may be or comprise an ingoing array cable from an array of offshore power generation units (best illustrated in Fig. 2). Another of the cables 20, 22 attached thereto may be or comprise an outgoing array cable, which may extend to an onshore location.

In order to connect the ingoing array cable and the outgoing array cable, the junction box 3 and the ingoing and/or outgoing array cable may be held on a vessel. The skilled person will understand that there may be various possible means by which to hold the junction box 3 and in the ingoing and/or outgoing array cables in place, for example they may be held by a crane, held by tensioners, or the like. The method may therefore comprise holding the junction box 3 on a vessel. The method may further comprise holding the ingoing and/or outgoing array cables on a vessel.

Once the junction box 3 and the ingoing and/or outgoing array cable are held in place, an operation may be performed on the junction box 3. The described method may therefore comprise performing an operation on the junction box 3, optionally performing an operation on the junction box 3 while holding the junction box 3 and/or the ingoing and outgoing array cables on a vessel. The operation may permit the connection of an ingoing array cable to an inlet connection point, and an outgoing array cable to an outlet connection point. The operation may comprise splicing of the ingoing and/or the outgoing array cable. For example, the splicing may be to a length of cabling inside the junction box 3. The length of cabling may provide an electrical connection between the inlet connection point and the outlet connection point. As such, splicing of the ingoing array cable to the inlet connection point and the outlet array cable to the outlet connection point may permit an electrical connection between the ingoing array cable and the outgoing array cable.

As illustrated in Figures 8 and 16, the junction box 3 in this example comprises a housing. To facilitate an operation to be performed, the housing may comprise at least one access point. The access point may be in the form of at least one port, through which the ingoing array cable and the outgoing array cable may be fed or located. The access point may alternatively be in the form of a removable panel or hatch, which may be opened or removed, thereby permitting access to the inside of the housing. Such access may assist in an operation to be performed (e.g. a splicing operation) on the cabling inside the housing. For example, a top or side panel of the housing may be removable in order to facilitate an operation to be performed on the cabling.

The access point may comprise a seal or sealing arrangement. The sealing arrangement may comprise at least one (e.g. multiple) individual seals. The sealing arrangement may assist to prevent ingress of water into the housing should the junction box 3 be submerged in water (e.g. if it were to be positioned in a subsea location), or at least into a section of housing in which water ingress may not be desired, for example into a section of the housing containing or comprising electrical connections. The sealing arrangement may comprise at least one seal located around the periphery of the access point.

In the example illustrated, the housing comprises a plurality of apertures 26 therein. In this example, the apertures are in the form of an array. The array of apertures may permit for water flooding of the housing of the junction box. Such water flooding may permit easier handling of the junction box 3, for example by reducing the buoyancy of the junction box when located subsea.

The junction box may comprise a section of material to hold cabling located thereinside. For example, the junction box may comprise a section of material to hold cabling inside the housing in an organised manner. The section of material may be a length of flexible bullnose. The cabling may be wrapped around the flexible bullnose prior to an operating on the cabling, and/or the ingoing/outgoing array cables. The section of material may be removed from the junction box 3 in order to perform an operation on the cabling. Having a section of material around which to wrap cabling may facilitate an operation to be performed on the cabling, as it may permit a section of the cabling to be conveniently located for splicing. For example, such a section of material may permit a section of cabling to be located proximate the access point.

The method may comprise performing a splicing operation on a vessel, on which the junction box 3 is held, such that the ingoing and outgoing array cables are spliced to the internal cabling in the junction box 3. The method may comprise sequential splicing of the ingoing and outgoing array cables to the internal cabling in the junction box 3. For example, the method may comprise first splicing the ingoing array cable to the cabling in the junction box 3, and then splicing the outgoing array cable to the cabling in the junction box 3, or vice versa. Alternatively, the method may comprise directly splicing at least a component of the ingoing array cable to the outgoing array cable in the junction box 3. As such, the method may comprise forming an electrical connection between the ingoing and outgoing array cables. The method comprises disconnecting the ingoing and outgoing array cable from an offshore power generation unit, and as such forming an electrical connection between the ingoing and outgoing array cable may permit bypass of the disconnected offshore power generation unit, such that the remainder of the array may still function. Meanwhile, the disconnected offshore power generation unit may be taken to be repaired or replaced (e.g. taken to an onshore location).

The method may comprise locating the junction box 3 at a subsea location, after an operation has been performed on the junction box 3. For example, the method may comprise releasing the junction box 3 from a floating structure (e.g. a vessel) and locating the junction box 3 at a subsea location. In one example, the method may comprise releasing the junction box 3 from a vessel, and locating the junction box on the sea floor. Such locating of the junction box 3 may be achieved by way of a support means. The support means may be or comprise a crane, a tensioner, or the like. The support means may be used to lower the junction box 3 from a floating structure (e.g. a vessel), to a subsea location. The junction box 3 may subsequently be secured at the subsea location. For example, the method may comprise providing a subsea structure onto which the junction box 3 is located. The subsea structure may be, for example, a concrete mattress, a frame, or the like. The subsea structure may assist to secure the junction box 3 on the sea floor, while still permitting the junction box 3 to be retrieved if necessary. For example, the subsea structure may assist to prevent the junction box 3 from becoming submerged in sand or detritus in a subsea location, which may increase the difficultly associated with retrieving the junction box 3 from the subsea location.

Once the junction box 3 has been located on structure, or on the sea floor, then the vessel may remain there for a period of time (e.g. days, weeks or months) until reparation or replacement of the offshore power generation unit has been completed. Once reparation or replacement of the offshore power generation unit has been completed, then the junction box 3 may once again be lifted to a floating structure (e.g. a vessel). Once on the floating structure, the ingoing and outgoing array cables on the junction box may be disconnected therefrom, and reattached to the repaired/replacement offshore power generation unit. As such, the junction box 3 may facilitate continued functioning of an array offshore power generation units, while one offshore power generation unit of the array is replaced or repaired.

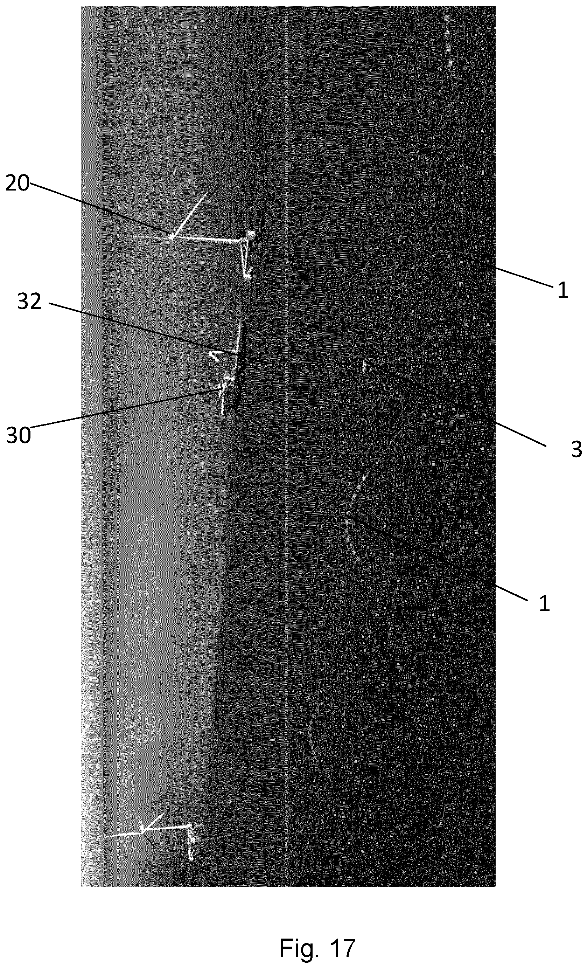

In Figure 17 there is illustrated a vessel 30 at an offshore location where there are located a plurality of power generation units, which in this case are wind turbines. As illustrated, a wind turbine 20 has been disconnected from array cables 1, and the array cables 1 are now terminated in a junction box 3. The junction box 3 is suspended from a vessel 30 by a cable 32, and the junction box 3 supports the weight of the array cables 1 as it is itself supported by the cable 32 from the vessel 30. In this case, the junction box 3 may be lowered to the seabed, and the vessel 30 may be used to tow the wind turbine 20 to a location where it is able to be repaired. In the meantime, the remainder of the power generation units may be able continue to generate power with minimal interruption. Once the wind turbine 20 has been repaired, the vessel 30 may be used to lift he junction box 3 once more, and reattach the repaired wind turbine 20 thereto. As such, the use of the junction box 3 may improve the functioning as it may permit an array of power generation units to provide power with minimal disruption caused by repairs and maintenance. In addition, the junction box may permit the array cable terminations to be safely stored in a subsea location while repair and/or maintenance work is taking place, for example without the vessel 30 having to remain on site.

The invention is not limited by the embodiments described above; reference should be had to the appended claims.

## Claims

1. An offshore power distribution system (100) comprising:
a plurality of first cables (1a-n), each first cable (1a-n) having a first dry mate connection (2b) at a first end (9b) thereof and being connected to an offshore power generator unit (7) at a second end (9a) thereof;
a subsea junction box (3) arranged at a sea floor (4), wherein each dry mate connection (2b) terminates inside the junction box (3);
a second cable (5) extending from the junction box (3) to a subsea transformer station (6) arranged at the sea floor (4), the second cable (5) having a second dry mate connection (10a) at an end (11a) thereof, the second dry mate connection (10a) terminating inside the junction box (3) operatively connected to the first dry mate connection (2b);
the second cable (5) extending to a subsea transformer station (6) arranged at the sea floor (4) and operatively connected to the transformer station (6);
a third cable (12) extending from the transformer station (6) to an onshore receiver (8);
the power distribution system being configured to transmit electric power from the offshore power generator unit (7), via the first, second and third cables, to an onshore receiver (8),
wherein the subsea junction box (3) is retrievable to surface and an end section (35) of the first cables (1a-n) and an end section (36) of the second cable (5) are laid out in parallel on the sea floor (4).

2. An offshore power distribution system (100) according to claim 1, wherein the first dry mate connection (2b) is:
a dry mate connector (2b), or
a spliced connection.

3. An offshore power distribution system (100) according to claim 1 or 2,
wherein the second dry mate connection (10a) is:
a dry mate connector (10a), or
a spliced connection.

4. An offshore power distribution system (100) according to any preceding claim, wherein each of the plurality of first cables (1a-n) is operatively connected to an inline fuse (33) arranged in the junction box (3).

5. An offshore power distribution system (100) according to any preceding claim, wherein the plurality of first cables (1a-n) has a design operational voltage of above 45 kV.

6. An offshore power distribution system (100) according to any preceding claim, wherein each power generation unit (7) comprises a respective switchgear arranged on or in the power generation unit (7), the switchgear being operable to selectively disconnect the respective power generation unit (7) from its first cable (1a-n).

7. An offshore power distribution system (100) according to the preceding claim, wherein neither the first cable (1a-n), the subsea junction box (3), the second cable (5) nor the transformer station (6) comprises a switchgear operable to selectively disconnect a power generation unit (7).

8. An offshore power distribution system (100) according to any preceding claim, wherein the end section (35) of the first cables (1a-n) and the end section (36) of the second cable (5) are laid out at position having a water depth, and wherein the end section (35) of the first cables (1a-n) and the end section (36) of the second cable (5) which are laid out in parallel on the sea floor (4) each have a length which is larger than the water depth.

9. A method of installing an offshore power distribution system (100) comprising the steps:
installing a plurality of power generators (7), each power generator having a first cable (1a-n) with a first dry mate connector (2b) at a first end (9b) thereof;
installing a subsea transformer station (6) at the sea floor (4) and installing a third cable (12) extending from the transformer station (6) to an onshore receiver (8);
installing a subsea junction box (3) at the sea floor (4), wherein the subsea junction box (3) is retrievable to surface,
connecting the subsea junction box (3) and the transformer station (6) with a second cable (5);
arranging an end section (35) of each first cable (1a-n) and an end section (36) of the second cable (5) in parallel on the sea floor (4); and
connecting the first cable (1a-n) with the second cable (5), wherein the step of connecting the first cable (1a-n) with the second cable (5) comprises establishing a dry mate connection between the first cable (1a-n) and the second cable (5) within the junction box (3).

10. A method according to claim 9, comprising
wet storing the first dry mate connector (2b) at a sea floor (4);
and wherein the step of connecting the first cable (1a-n) with the second cable (5) comprises retrieving the first dry mate connector (2b) from the sea floor (4) and establishing the dry mate connection between the first cable (1a-n) and the second cable (5) at a vessel (20).

11. A method according to claim 9 or 10, comprising
wet storing a second dry mate connector (10a) connected to the second cable (5) at a sea floor (4);
and wherein the step of connecting the first cable (1a-n) with the second cable (5) comprises retrieving the second dry mate connector (10a) from the sea floor (4) before establishing the dry mate connection between the first cable (1a-n) and the second cable (5) at the vessel (20).

12. A method according to the preceding claim, wherein the end section (35) of the first cables (1a-n) and the end section (36) of the second cable (5) are arranged at position having a water depth, and wherein the end section (35) of the first cables (1a-n) and the end section (36) of the second cable (5) which are arranged in parallel on the sea floor (4) each have a length which is larger than the water depth.

13. A method according to any of claims 9 to 12, comprising installing the subsea transformer station (6) together with the second cable (5) and with a transformer end connector (10b) of the second cable (5) having been pre-installed on the transformer station (6).

14. A method according to any of claims 9 to 13, comprising installing the subsea transformer station (6) together with the third cable (12) or a part of the third cable (12), and with the third cable (12) or the part of the third cable (12) having been pre-installed on the transformer station (6).

15. A method of distributing power in an offshore power distribution system (100), the method comprising:
operating a system according to any of claims 1-8;
retrieving the junction box (3) from the sea floor (4) to a vessel (20);
carrying out an installation, de-installation or service operation on the junction box (3); and
re-installing the junction box (3) to the sea floor (4).

## Patentansprüche

1. Offshore-Leistungsverteilungssystem (100), umfassend:
eine Vielzahl von ersten Kabeln (1a-n), wobei jedes erste Kabel (la-n) an einem ersten Ende (9b) davon eine erste Trockensteckverbindung (2b) aufweist und an einem zweiten Ende (9a) davon mit einer Offshore-Leistungsgeneratoreinheit (7) verbunden ist;
einen Unterwasseranschlusskasten (3), der auf einem Meeresboden (4) angeordnet ist, wobei jede Trockensteckverbindung (2b) innerhalb des Anschlusskastens (3) endet;
ein zweites Kabel (5), das sich von dem Anschlusskasten (3) zu einer auf dem Meeresboden (4) angeordneten Unterwassertransformatorstation (6) erstreckt, wobei das zweite Kabel (5) an einem Ende (11a) davon eine zweite Trockensteckverbindung (10a) aufweist und die zweite Trockensteckverbindung (10a) innerhalb des Anschlusskastens (3) endet und mit der ersten Trockensteckverbindung (2b) wirkverbunden ist;
wobei sich das zweite Kabel (5) zu der auf dem Meeresboden (4) angeordneten Unterwassertransformatorstation (6) erstreckt und mit der Transformatorstation (6) wirkverbunden ist;
ein drittes Kabel (12), das sich von der Transformatorstation (6) zu einem Empfänger (8) an Land erstreckt;
wobei das Leistungsverteilungssystem dazu konfiguriert ist, elektrische Leistung von der Offshore-Leistungsgeneratoreinheit (7) über das erste, das zweite und das dritte Kabel an einen Empfänger (8) an Land zu übertragen, wobei der Unterwasseranschlusskasten (3) zur Oberfläche zurückbringbar ist und ein Endabschnitt (35) der ersten Kabel (la-n) und ein Endabschnitt (36) des zweiten Kabels (5) parallel auf dem Meeresboden (4) verlegt sind.

2. Offshore-Leistungsverteilungssystem (100) nach Anspruch 1, wobei es sich bei der ersten Trockensteckverbindung (2b) um Folgendes handelt:
einen Trockensteckverbinder (2b) oder
eine Spleißverbindung.

3. Offshore-Leistungsverteilungssystem (100) nach Anspruch 1 oder 2, wobei es sich bei der zweiten Trockensteckverbindung (10a) um Folgendes handelt:
einen Trockensteckverbinder (10a) oder
eine Spleißverbindung.

4. Offshore-Leistungsverteilungssystem (100) nach einem vorhergehenden Anspruch, wobei jedes der Vielzahl von ersten Kabeln (la-n) mit einer in dem Anschlusskasten (3) angeordneten Inline-Sicherung (33) wirkverbunden ist.

5. Offshore-Leistungsverteilungssystem (100) nach einem vorhergehenden Anspruch, wobei die Vielzahl von ersten Kabeln (la-n) eine Bemessungsbetriebsspannung über 45 kV aufweist.

6. Offshore-Leistungsverteilungssystem (100) nach einem vorhergehenden Anspruch, wobei jede Leistungserzeugungseinheit (7) eine jeweilige Schaltanlage umfasst, die an oder in der Leistungserzeugungseinheit (7) angeordnet ist, wobei die Schaltanlage betreibbar ist, um selektiv die jeweilige Leistungserzeugungseinheit (7) von deren erstem Kabel (la-n) zu trennen.

7. Offshore-Leistungsverteilungssystem (100) nach dem vorhergehenden Anspruch, wobei weder das erste Kabel (1a-n), der Unterwasseranschlusskasten (3), das zweite Kabel (5) noch die Transformatorstation (6) eine Schaltanlage umfassen, die betreibbar ist, um selektiv eine Leistungserzeugungseinheit (7) zu trennen.

8. Offshore-Leistungsverteilungssystem (100) nach einem vorhergehenden Anspruch, wobei der Endabschnitt (35) der ersten Kabel (la-n) und der Endabschnitt (36) des zweiten Kabels (5) in einer Position verlegt sind, die eine Wassertiefe aufweist, und wobei der Endabschnitt (35) der ersten Kabel (la-n) und der Endabschnitt (36) des zweiten Kabels (5), die parallel auf dem Meeresboden (4) verlegt sind, jeweils eine Länge aufweisen, die größer als die Wassertiefe ist.

9. Verfahren zum Installieren eines Offshore-Leistungsverteilungssystems (100), umfassend die folgenden Schritte:
Installieren einer Vielzahl von Leistungsgeneratoren (7), wobei jeder Leistungsgenerator ein erstes Kabel (la-n) mit einem ersten Trockensteckverbinder (2b) an einem ersten Ende (9b) davon aufweist;
Installieren einer Unterwassertransformatorstation (6) auf dem Meeresboden (4) und Installieren eines dritten Kabels (12), das sich von der Transformatorstation (6) zu einem Empfänger (8) an Land erstreckt;
Installieren eines Unterwasseranschlusskastens (3) auf dem Meeresboden (4), wobei der Unterwasseranschlusskasten (3) zur Oberfläche zurückbringbar ist, und Verbinden des Unterwasseranschlusskastens (3) und der Transformatorstation (6) mit einem zweiten Kabel (5);
Anordnen eines Endabschnitts (35) jedes ersten Kabels (la-n) und eines Endabschnitts (36) des zweites Kabels (5) parallel auf dem Meeresboden (4); und
Verbinden des ersten Kabels (la-n) mit dem zweiten Kabel (5), wobei der Schritt des Verbindens des ersten Kabels (la-n) mit dem zweiten Kabel (5) Herstellen einer Trockensteckverbindung zwischen dem ersten Kabel (la-n) und dem zweiten Kabel (5) innerhalb des Anschlusskastens (3) umfasst.

10. Verfahren nach Anspruch 9, umfassend Nasslagern des ersten Trockensteckverbinders (2b) auf einem Meeresboden (4);
und wobei der Schritt des Verbindens des ersten Kabels (la-n) mit dem zweiten Kabel (5) Zurückbringen des ersten Trockensteckverbinders (2b) von dem Meeresboden (4) und Herstellen der Trockensteckverbindung zwischen dem ersten Kabel (la-n) und dem zweiten Kabel (5) auf einem Schiff (20) umfasst.

11. Verfahren nach Anspruch 9 oder 10, umfassend Nasslagern eines zweiten Trockensteckverbinders (10a), der auf einem Meeresboden (4) mit dem zweiten Kabel (5) verbunden ist;
und wobei der Schritt des Verbindens des ersten Kabels (la-n) mit dem zweiten Kabel (5) Zurückbringen des zweiten Trockensteckverbinders (10a) von dem Meeresboden (4) vor dem Herstellen der Trockensteckverbindung zwischen dem ersten Kabel (la-n) und dem zweiten Kabel (5) auf dem Schiff (20) umfasst.

12. Verfahren nach dem vorhergehenden Anspruch, wobei der Endabschnitt (35) der ersten Kabel (la-n) und der Endabschnitt (36) des zweiten Kabels (5) in einer Position angeordnet sind, die eine Wassertiefe aufweist, und wobei der Endabschnitt (35) der ersten Kabel (la-n) und der Endabschnitt (36) des zweiten Kabels (5), die parallel auf dem Meeresboden (4) angeordnet sind, jeweils eine Länge aufweisen, die größer als die Wassertiefe ist.

13. Verfahren nach einem der Ansprüche 9 bis 12, umfassend Installieren der Unterwassertransformatorstation (6) zusammen mit dem zweiten Kabel (5) und mit einem Transformatorendverbinder (10b) des zweiten Kabels (5), das an der Transformatorstation (6) vorinstalliert wurde.

14. Verfahren nach einem der Ansprüche 9 bis 13, umfassend Installieren der Unterwassertransformatorstation (6) zusammen mit dem dritten Kabel (12) oder einem Teil des dritten Kabels (12) und wobei das dritte Kabel (12) oder der Teil des dritten Kabels (12) an der Transformatorstation (6) vorinstalliert wurde.

15. Verfahren zum Verteilen von Leistung in einem Offshore-Leistungsverteilungssystem (100), wobei das Verfahren Folgendes umfasst:
Betreiben eines Systems nach einem der Ansprüche 1-8;
Zurückbringen des Anschlusskastens (3) von dem Meeresboden (4) auf ein Schiff (20);
Ausführen eines Installations-, Deinstallations- oder Wartungsvorgangs an dem Anschlusskasten (3); und
erneutes Installieren des Anschlusskastens (3) an dem Meeresboden (4).

## Revendications

1. Système de distribution d'énergie en haute mer (100) comprenant :
une pluralité de premiers câbles (1a-n), chaque premier câble (la-n) présentant un premier raccordement enfichable à sec (2b) au niveau d'une première extrémité (9b) de celui-ci et étant connecté à une unité génératrice d'énergie (7) en haute mer au niveau d'une seconde extrémité (9a) de celui-ci ;
une boîte de jonction sous-marine (3) agencée au niveau d'un fond marin (4), dans lequel chaque raccordement enfichable à sec (2b) se termine à l'intérieur de la boîte de jonction (3) ;
un deuxième câble (5) s'étendant à partir de la boîte de jonction (3) jusqu'à une station de transformation sous-marine (6) agencée au niveau d'un fond marin (4), le deuxième câble (5) présentant un second raccordement enfichable à sec (10a) au niveau d'une extrémité (11a) de celui-ci, le second raccordement enfichable à sec (10a) se terminant à l'intérieur de la boîte de jonction (3) de manière fonctionnellement connectée au premier raccordement enfichable à sec (2b) ;
le deuxième câble (5) s'étendant jusqu'à une station de transformation sous-marine (6) agencée au niveau du fond marin (4) et de manière fonctionnellement connectée à la station de transformation (6) ;
un troisième câble (12) s'étendant à partir de la station de transformation (6) jusqu'à un récepteur à terre (8) ;
le système de distribution d'énergie étant configuré pour transmettre de l'énergie électrique provenant de l'unité génératrice d'énergie (7) en haute mer, via les premiers, deuxième et troisième câbles, jusqu'à un récepteur à terre (8), dans lequel la boîte de jonction sous-marine (3) peut être récupérée vers la surface et une section d'extrémité (35) des premiers câbles (la-n) et une section d'extrémité (36) du deuxième câble (5) sont disposées en parallèle sur le fond marin (4).

2. Système de distribution d'énergie en haute mer (100) selon la revendication 1, dans lequel le premier raccordement enfichable à sec (2b) est :
un connecteur enfichable à sec (2b), ou un raccordement épissé. un raccordement épissé.

3. Système de distribution d'énergie en haute mer (100) selon la revendication 1 ou 2, dans lequel le second raccordement enfichable à sec (10a) est :
un connecteur enfichable à sec (10a), ou un raccordement épissé. un raccordement épissé.

4. Système de distribution d'énergie en haute mer (100) selon une quelconque revendication précédente, dans lequel chacun de la pluralité de premiers câbles (la-n) est fonctionnellement connecté à un fusible en ligne (33) agencé dans la boîte de jonction (3).

5. Système de distribution d'énergie en haute mer (100) selon une quelconque revendication précédente, dans lequel la pluralité de premiers câbles (la-n) présente une tension de fonctionnement de conception supérieure à 45 kV.

6. Système de distribution d'énergie en haute mer (100) selon une quelconque revendication précédente, dans lequel chaque unité génératrice d'énergie (7) comprend un appareillage de commutation respectif agencé sur ou dans l'unité génératrice d'énergie (7), l'appareillage de commutation pouvant être actionné pour déconnecter sélectivement l'unité génératrice d'énergie (7) respective de son premier câble (1a-n).

7. Système de distribution d'énergie en haute mer (100) selon la revendication précédente, dans lequel ni le premier câble (1a-n), ni la boîte de jonction sous-marine (3), ni le deuxième câble (5), ni la station de transformation (6) ne comprend un appareillage de commutation pouvant être actionné pour déconnecter sélectivement une unité génératrice d'énergie (7).

8. Système de distribution d'énergie en haute mer (100) selon une quelconque revendication précédente, dans lequel la section d'extrémité (35) des premiers câbles (la-n) et la section d'extrémité (36) du deuxième câble (5) sont disposées au niveau d'une position présentant une profondeur d'eau, et dans lequel la section d'extrémité (35) des premiers câbles (la-n) et la section d'extrémité (36) du deuxième câble (5) qui sont disposées en parallèle sur le fond marin (4) présentent chacune une longueur qui est supérieure à la profondeur d'eau.

9. Procédé d'installation d'un système de distribution d'énergie en haute mer (100) comprenant les étapes :
installer une pluralité d'unités génératrices d'énergie (7), chaque unité génératrice d'énergie présentant un premier câble (la-n) avec un premier connecteur enfichable à sec (2b) au niveau d'une première extrémité (9b) de celui-ci ;
installer une station de transformation sous-marine (6) au niveau du fond marin (4) et installer un troisième câble (12) s'étendant à partir de la station de transformation (6) jusqu'à un récepteur à terre (8) ;
installer une boîte de jonction sous-marine (3) au niveau du fond marin (4), dans lequel la boîte de jonction sous-marine (3) peut être récupérée vers la surface, connecter la boîte de jonction sous-marine (3) et la station de transformation (6) avec un deuxième câble (5) ;
agencer une section d'extrémité (35) de chaque premier câble (la-n) et une section d'extrémité (36) du deuxième câble (5) en parallèle sur le fond marin (4) ; et
connecter le premier câble (la-n) avec le deuxième câble (5), dans lequel l'étape consistant à connecter le premier câble (1an) avec le deuxième câble (5) comprend l'établissement d'un raccordement enfichable à sec entre le premier câble (la-n) et le deuxième câble (5) à l'intérieur de la boîte de jonction (3).

10. Procédé selon la revendication 9, comprenant le stockage en immersion du premier connecteur enfichable à sec (2b) au niveau d'un fond marin (4) ;
et dans lequel l'étape consistant à connecter le premier câble (la-n) avec le deuxième câble (5) comprend la récupération du premier connecteur enfichable à sec (2b) à partir du fond marin (4) et l'établissement du raccordement enfichable à sec entre le premier câble (la-n) et le deuxième câble (5) à bord d'un navire (20).

11. Procédé selon la revendication 9 ou 10, comprenant le stockage en immersion d'un second connecteur enfichable à sec (10a) connecté au deuxième câble (5) au niveau d'un fond marin (4) ;
et dans lequel l'étape consistant à connecter le premier câble (la-n) avec le deuxième câble (5) comprend la récupération du second connecteur enfichable à sec (10a) à partir du fond marin (4) avant l'établissement du raccordement enfichable à sec entre le premier câble (la-n) et le deuxième câble (5) à bord d'un navire (20).

12. Procédé selon la revendication précédente, dans lequel la section d'extrémité (35) des premiers câbles (la-n) et la section d'extrémité (36) du deuxième câble (5) sont agencées au niveau d'une position présentant une profondeur d'eau, et dans lequel la section d'extrémité (35) des premiers câbles (la-n) et la section d'extrémité (36) du deuxième câble (5) qui sont agencées en parallèle sur le fond marin (4) présentent chacune une longueur qui est supérieure à la profondeur d'eau.

13. Procédé selon une quelconque des revendications 9 à 12, comprenant l'installation de la station de transformation sous-marine (6) conjointement avec le deuxième câble (5) et avec un connecteur d'extrémité de transformateur (10b) du deuxième câble (5) ayant été préinterallé sur la station de transformation (6).

14. Procédé selon une quelconque des revendications 9 à 13, comprenant l'installation de la station de transformation sous-marine (6) conjointement avec le troisième câble (12) ou une partie du troisième câble (12), et avec le troisième câble (12) ou la partie du troisième câble (12) ayant été préinstallé sur la station de transformation (6).

15. Procédé de distribution d'énergie dans un système de distribution d'énergie en haute mer (100), le procédé comprenant :
le fonctionnement d'un système selon une quelconque des revendications 1 à 8 ;
la récupération de la boîte de jonction (3) à partir du fond marin (4) jusqu'à un navire (20) ;
la réalisation d'une opération de maintenance sur la boîte de jonction (3) ; et
la réinstallation de la boîte de jonction (3) sur le fond marin (4).
